# DEMANDE DE BREVET EUROPEEN

(11) **EP 3 496 005 A1**
(43) Date de publication de la demande: **12.06.2019**
(21) Numéro de dépôt: 17306727.3
(22) Date de dépôt: 08.12.2017
(51) Int. Cl.: G06K 19/077

(54) **PROCÉDÉ DE FABRICATION D'UN SUPPORT À PUCE RADIOFRÉQUENCE**

(71) Demandeur: GEMALTO SA, 92190 Meudon (FR)
(72) Inventeur: SEBAN, Frédérick, 13881 GEMENOS Cedex (FR); BUYUKKALENDER, Arek, 13881 GEMENOS Cedex (FR); POITRASSON, Eric, 13881 GEMENOS Cedex (FR); TORRADO, Antonio, 13881 GEMENOS Cedex (FR); DURANO, Frédéric, 13881 GEMENOS Cedex (FR)

(57) **Abrégé**

L'invention concerne un procédé de fabrication d'un support à puce radiofréquence, ledit procédé comportant l'étape de formation sur un support d'une première spirale (2) avec des zones d'interconnexion électriques (3, 4) ; Le procédé est caractérisé en ce qu'il comprend l'étape de formation d'une seconde spirale (5) reliée à l'une des zones d'interconnexion (3, 4) par une liaison 6, la configuration de la première et seconde spirale formant une antenne passive (2-5).

L'invention concerne également le support à puce correspondant.

## Description

### Domaine de l'invention.

L'invention concerne le domaine des transpondeurs radiofréquences et la structure de ces transpondeurs radiofréquences.

Elle concerne plus particulièrement les supports à puce radiofréquence couplée à une antenne. Le couplage de la puce radiofréquence à l'antenne peut être réalisé de différentes manières comprenant notamment un couplage électromagnétique, électrique ou capacitif.

Dans le premier cas (électromagnétique ou inductif), la puce communique avec l'extérieur à l'aide d'une antenne de puce (ou de module) via une antenne passive généralement plus importante que celle liée à la puce radiofréquence. Les deux antennes sont couplées électromagnétiquement. Dans le second cas plus classique, la puce communique avec l'extérieur via une antenne unique qui lui est connectée électriquement. Le cas échéant, la puce peut avoir une liaison ou deux de type capacitif avec des plages d'interconnexion de l'antenne passive.

L'invention prévoit de préférence également que les puces radiofréquences visées aient également une interface à contacts en plus de l'interface radiofréquence.

Les antennes sont généralement fabriquées sur des supports isolants ou inserts (inlays), par exemple sur des feuilles plastiques.

L'invention peut également viser des systèmes de documents de voyage électroniques sans contact, tels que passeports électroniques et visas électroniques sous forme de transpondeurs disposés ensemble. En particulier, ces documents et visas sont conformes aux spécifications de l'ICAO (acronyme de l'expression anglo-saxonne "International Civil Aviation Organization") et norme ISO/IEC 14443.

### Art antérieur

Le document US 6 378 774 décrit une carte à puce comprenant un module de circuit intégré à interfaces de communication à contacts et à antenne. Le corps de carte comprend une antenne passive qui comprend deux bobines montées en parallèle sur une capacité, une bobine large fermée pouvant être disposée sensiblement en périphérie du corps de carte et une bobine étroite disposée centrée avec l'antenne du module. La bobine large a pour fonction de communiquer vis-à-vis d'un lecteur externe et la boucle étroite a pour fonction de se coupler électro- magnétiquement et de communiquer avec le module.

Ces supports ont l'inconvénient, du fait du recours à une antenne principale passive à deux boucles en forme d'un huit, de présenter une construction complexe prenant beaucoup de surface dans un corps de carte (avec les condensateurs) et d'être conçu pour un fonctionnement exclusif d'antenne passive.

Par ailleurs, on connait la fabrication d'antennes spiralées imbriquées l'une dans l'autre pour former une antenne passive.

### Problème technique.

Un même fabricant de supports à puce radiofréquence tels des cartes à puce, assiste à une multiplication des références d'antennes inductives (passives) et d'antenne connectées autrement en production.

Par ailleurs, un même support à puce radiofréquence peut être fabriqué en utilisant des inserts à antenne différents fonctionnant avec des principes de couplage différents de la puce radiofréquence avec l'antenne principale (antenne passive ou antenne connectée électriquement)

Cela peut amener un fabricant à gérer plusieurs corps de cartes ayant un logo identique notamment dans le cas d'une offre commerciale dont le module est assemblé par le client.

Il peut également y avoir des d'erreurs dans les corps de carte ou des mélanges de corps de carte fonctionnant sous des principes différents et conduisant à des rebuts. Il est évident qu'un corps de carte à antenne passive ne peut être couplé qu'avec le module correspondant comprenant une antenne de puce et pas avec un module à couplage électrique.

L'invention vise à résoudre les inconvénients précités.

### Résumé de l'invention.

L'invention consiste à concevoir un unique motif d'antenne pour plusieurs principes de fonctionnement concernant la liaison de la puce à l'antenne principale de communication avec l'extérieur.

Dans son principe, l'invention prévoit sur une même antenne passive plusieurs couplages possibles avec un module à puce (ou avec une puce électronique). Elle prévoit en particulier de réaliser des plages de couplage sur un parcours d'une antenne passive. Le couplage des plages peut être effectué par contact ohmique ou par couplage capacitif. Une plage d'interconnexion d'antenne peut être connectée à une plage de module par contact ohmique électrique et l'autre par couplage capacitif. Chaque plage peut former une plaque de condensateur ou une zone d'interconnexion électrique.

En fait, les plages d'interconnexion (zigzags) peuvent être à tout endroit d'un parcours d'antenne passive, pas uniquement au début d'un parcours (pour l'une plage et sensiblement au milieu d'un parcours pour l'autre plage.

Le cas échéant, des portions d'antenne passive peuvent être sectionnées pour être désactivées et ne pas interférer avec les portions utiles de l'antenne exploitée et fonctionnant selon un principe distinct de celui d'une antenne passive.

Par défaut, l'antenne unique fonctionne selon un premier principe de couplage inductif avec un transpondeur à puce radiofréquence et moyennant une coupure (si nécessaire pour satisfaire le standard ISO 14443) de l'antenne unique à un endroit prédéterminé (pour en isoler une partie), l'antenne résultante peut fonctionner selon l'autre principe.

De cette manière, par défaut, l'antenne (ou spirale) créée est une antenne pour couplage inductif avec un transpondeur radiofréquence (ou module à antenne). Celle-ci a l'avantage de pouvoir devenir une antenne à technologie connectée, en coupant (au besoin pour l'ISO 14443) la partie superflue (par exemple une partie qui s'entrelace dans la spirale exploitée et qui pourrait provoquer des interférences.

Selon un mode avantageux, le procédé prévoit de rendre inactive la deuxième spirale lors de l'usinage des plages d'interconnexion dans la cavité d'insertion d'un module à puce. La partie de l'antenne coupée / isolée a l'avantage de ne pas perturber l'antenne restante (comportant les zones d'interconnexion) puisque cette dernière est en l'air et est configurée pour résonner à une fréquence de résonance très haute (30∼40 MHz).

Le transpondeur (ou module) radiofréquence peut être configuré pour être accordé avec cette dernière antenne (en l'air) notamment par le choix de la capacité embarquée dans la puce et/ou module.

A cet effet, l'invention a pour objet un procédé de fabrication d'un support à puce radiofréquence, ledit procédé comportant l'étape de formation sur un support d'une première spirale (2) avec des zones d'interconnexion électriques. Le procédé est caractérisé en ce qu'elle comprend l'étape de formation d'une seconde spirale reliée à l'une des zones d'interconnexion par une liaison, la configuration de la première et seconde spirale formant une antenne passive.

Selon d'autres caractéristiques :
- La seconde spirale peut être imbriquée dans la première spirale ;
- Le procédé comprend les étapes de couplage électromagnétique de ladite antenne passive avec la puce radiofréquence, les deux spirales étant maintenues reliées électriquement ou de couplage électrique de la puce radiofréquence à ladite première spirale formant une antenne via lesdites zones d'interconnexion électrique, après séparation de la première spirale de la seconde ;
- La seconde spirale s'étend à partir d'une des zones d'interconnexion, sensiblement le long et entre des spires de ladite première spirale ;
- Les spirales sont formées à partir de pistes ou de fil en une seule opération continue ;
- Les spirales sont séparées par une coupure réalisée dans une cavité de réception de la puce radiofréquence ou d'un module comportant la puce ;

L'invention a également pour objet un support à puce radiofréquence, comportant sur un support isolant, une première spirale avec des zones d'interconnexion électriques reposant sur le support ; Le support à puce est caractérisé en ce qu'il comprend sur ledit support une seconde spirale reliée à l'une des zones d'interconnexion par une liaison. La liaison peut être très courte ; Elle est de préférence destinée ou configurée de manière à pouvoir être sectionnée facilement.

Selon d'autres caractéristiques :
- La seconde spirale est imbriquée dans la première spirale ;
- Le support à puce comprend la première spirale séparée de la seconde par une coupure de ladite liaison, ladite puce radiofréquence étant couplée électriquement à ladite première spirale via les zones d'interconnexion électriques ;
- Les spirales sont reliées ensemble pour former une antenne passive couplée électro magnétiquement avec la puce radiofréquence.
- La puce radiofréquence est comprise dans un module de carte à puce à interface duale (contacts et sans contacts électrique), ledit module étant insérée dans une cavité du support à puce.

### Descriptif des figures :

- La figure 1 illustre un exemple d'antenne réalisée selon un mode de mise en oeuvre préféré de l'invention ;
- La figure 2 illustre une carte à puce sans-contact comprenant l'antenne de la figure précédente, recouvert de feuilles de recouvrement et une cavité de réception de module de carte à puce radiofréquence et/ou à contacts électriques.

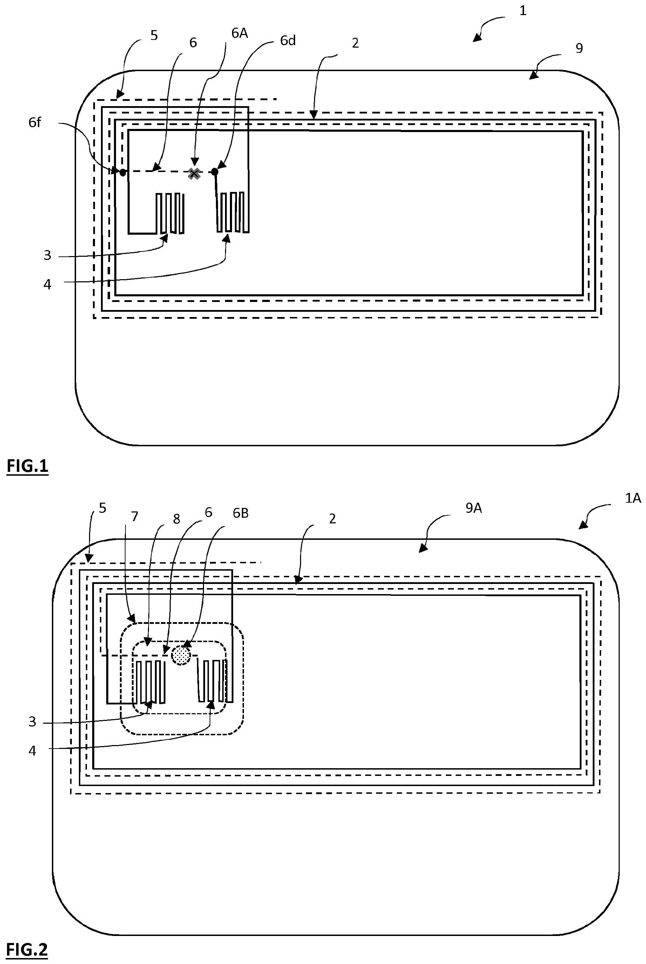

A la figure 1, est illustré un support à puce radiofréquence, obtenu par la mise en oeuvre d'un mode préféré du procédé de fabrication de l'invention.
Selon ce mode, le procédé comportant l'étape de formation sur un support d'une première spirale 2 avec des zones d'interconnexion électriques (3, 4).
Dans l'exemple, on forme préférentiellement une spirale 2 sous forme de fil conducteur incrusté dans une feuille polymère. Le fil est de préférence isolé électriquement par un gainage externe. La spirale comprend plusieurs spires par exemple de 3 à 10 spires. Le support peut être au format standard des cartes à puce environ 54 X 86 mm. Il peut être au format des passeports selon l'ICAO ou autre format selon l'utilisation (montre connectée, clés USB...)

Les zones d'interconnexion 3, 4 sont formées ici par le même fil en continuité de la première spirale 2 et au cours d'une même opération d'incrustation de fil conducteur dans un support. Les zones 3, 4 sont ici en forme de zigzags ou alternances de fils, concentrées dans chaque zone d'interconnexion délimitée par un rectangle, Les zones peuvent avoir d'autres formes : circulaires, carrées, triangulaires. Elles reposent sur le support comme la spirale.

Alternativement, la spirale 2 peut être obtenue par gravure chimique notamment de cuivre ou tout autre procédé connu de l'homme de l'art (jet de matière, etc.)

Selon une caractéristique de ce mode préféré, le procédé comprend l'étape de formation d'une seconde spirale 5 reliée à l'une des zones d'interconnexion 3, 4 par une liaison 6.

Dans l'exemple, la seconde spirale est imbriquée dans la première spirale 2 et la liaison est configurée / agencée dans le corps du support pour être sectionnée de manière inaperçue / invisible de l'extérieur.

La seconde spirale est avantageusement réalisée par la même technologue que celle utilisée pour la première spirale. Dans l'exemple, la seconde spirale 5 est réalisée dans la foulée de la première par le même outil d'incrustation de fil conducteur. Les spirales peuvent donc être formées à partir de pistes ou de fil en une seule opération continue.

La seconde spirale 5 s'étend sensiblement à partir d'une des zones d'interconnexion 3, 4, le long et entre des spires de ladite première spirale. La seconde spirale peut avoir ou non autant de spires du la première spirale.

Grâce à cette configuration de spirales ensemble sur un même support, l'invention permet d'avoir en l'état des deux spirales ainsi réalisées deux antennes potentiellement utilisables ci-après. Une première antenne passive (obtenue par défaut) correspond aux deux spirales 2, 5 reliées ensemble par un segment de liaison 6 (et comprenant les zones d'interconnexion 3, 4.

Une seconde antenne 2-4 correspond uniquement à la spirale 2 avec les zones d'interconnexion 3, 4. Pour utiliser la seconde antenne (2-4), l'invention peut prévoir (si nécessaire mais quand même de préférence), de déconnecter la seconde spirale 5 de la première 2 par un sectionnement de la liaison 6 entre les deux spirales 2, 5. Dans le mode préféré, la déconnexion (ou sectionnement) est effectuée pour avoir des performances de communication conformes à l'ISO 14433. Sans sectionnement susvisé, la communication peut s'effectuer mais ne serait pas optimale compte tenu des caractéristiques des puces disponibles actuellement.

Selon une autre caractéristique de ce mode préféré, le procédé comprend les étapes suivantes :
1) couplage électromagnétique de la première antenne passive 2-5 avec la puce radiofréquence, les deux spirales 2 et 5 étant maintenues reliées électriquement,
2) ou couplage électrique de la puce radiofréquence à ladite seconde antenne via les zones d'interconnexion électrique, après déconnexion de la première spirale 2 de la seconde spirale 5.

Ainsi, dans le cas 1, l'invention permet de coupler avec l'antenne passive 2-5 de manière inductive ou électro magnétiquement, un transpondeur radiofréquence, par exemple un module de carte à puce comportant une antenne reliée à la puce et supportée sur un substrat du module (film diélectrique du module). Le module peut être du type de celui décrit dans le document US 6 378 774 de type hybride (ou interface duale). Le transpondeur radiofréquence peut être constitué d'une puce radiofréquence comportant une antenne gravée sur la puce.

Dans le cas 2, l'invention permet de coupler avec l'antenne 2-4 de manière électrique (connexion ohmique), une puce radiofréquence, (par exemple sous forme de module de carte à puce comportant une la puce supportée sur un substrat et ayant des plages d'interconnexion correspondant aux zones d'interconnexion de la seconde antenne). Un module uniquement radiofréquence peut être destiné à être enfoui totalement dans le corps du support à puce et être recouvert de matière du support.

A la figure 2, l'insert (ou inlay) de la figure 1 est assemblé avec des feuilles complémentaires de recouvrement, notamment par lamination. Il en résulte support 1A ayant un corps 9A de dispositif radiofréquence, en l'occurrence une carte à puce. La figure 2 montre uniquement un emplacement de la cavité de réception de module. (Les antennes sont enfouies dans le corps 9A de carte bien que la spirale 2 ne soit pas en pointillés).

Le dispositif comporte également une cavité 7, 8 (à deux plans P1, P2) débouchant ici en surface du corps de dispositif. La cavité est destinée à recevoir un module radiofréquence (non illustré)

Alternativement, le module peut être recouvert lui-même d'une feuille de recouvrement quand il n'est pas destiné à recevoir un bornier de contacts électriques en surface du corps de dispositif radiofréquence.

Selon une caractéristique du mode préféré, les spirales 2, 5 sont séparées par une coupure réalisée dans une cavité de réception de la puce radiofréquence ou d'un module comportant la puce.
Dans l'exemple, le sectionnement du fil (ou séparation des spirales) peut être réalisé par la même fraise qui est utilisée pour réaliser la cavité ou pour dénuder en surface les fils en zigzags de manière à les préparer à une connexion électrique ohmique.

Avantageusement, on observe que la cavité comprend une perforation / usinage 6b positionnée sur la liaison 6 passant par la cavité (ou son emplacement). La perforation passe donc inaperçue de l'extérieur, quand le module est présent dans la cavité.

Ainsi, l'invention permet d'obtenir un support à puce radiofréquence, comportant sur un support isolant, une première spirale 2 avec des zones d'interconnexion électriques 3, reposant sur le support. Le support comprend sur lui, une seconde spirale 5 et reliée à l'une des zones d'interconnexion 3, 4 par une liaison 6.

De préférence la seconde spirale est imbriquée dans la première de manière à simplifier la fabrication.

L'invention n'exclut pas de réaliser la seconde spirale 5 de manière non imbriquée dans la première. Elle peut alternativement être simplement reliée à la première et être agencée différemment de manière connue par l'homme de l'art. Par exemple, la seconde spirale 5 peut s'étendre à l'extérieur ou intérieur de la première spirale 2. Elle peut également être reliée à des plaques de condensateur pour former une capacité ou à une capacité de type CMS, ou fabriquée à l'intérieur d'un module.

L'invention permet d'obtenir deux supports (produits ou dispositifs) à puce suivants :
1) un type de support de puce radiofréquence dans lequel les spirales sont reliées ensemble pour former une antenne passive ou relais, cette dernière étant couplées électro magnétiquement avec la puce radiofréquence.
2) un autre type de support dans lequel la première spirale 2 est séparée de la seconde 5 par une coupure de la liaison 6, la puce radiofréquence étant couplée électriquement à la première spirale 2 via les zones d'interconnexion électrique.

L'invention prévoit également que le support à puce radiofréquence, soit une carte à puce à interface duale (contact et sans contact). Pour cela, la puce radiofréquence est comprise dans un module de carte à puce à interface duale (contacts et sans contact) en ajoutant un bornier de contacts électriques sur le module relié à la puce de type hybride. Le module peut être inséré dans une cavité 7, 8 du support à puce.

## Revendications

1. Procédé de fabrication d'un support (1, 1A) à puce radiofréquence, ledit procédé comportant l'étape de formation sur un support d'une première spirale (2) avec des zones d'interconnexion électriques (3, 4),
**caractérisé en ce qu'**elle comprend l'étape de formation d'une seconde spirale (5) reliée à l'une des zones d'interconnexion (3, 4) par une liaison (6), la configuration de la première et seconde spirale formant une antenne passive (2-5).
Procédé selon la revendication précédente, **caractérisée en ce que** ladite seconde spirale (5) est imbriquée dans la première spirale.

2. Procédé selon la revendication précédente, **caractérisée en ce qu'**elle comprend les étapes suivantes :
- couplage électromagnétique de ladite antenne passive (2-5) avec la puce radiofréquence, les deux spirales (2,5) étant maintenues reliées électriquement.
- ou couplage électrique de la puce radiofréquence à ladite première spirale (2) formant une antenne (2-4) via lesdites zones d'interconnexion électrique, après séparation de la première spirale (2) de la seconde (5).

3. Procédé selon l'une des revendications précédentes,
**caractérisé en ce qu'**elle ladite seconde spirale (5) s'étend sensiblement à partir d'une des zones d'interconnexion (3, 4), le long et entre des spires de ladite première spirale (2).

4. Procédé selon la revendication précédente, **caractérisée en ce que** lesdites spirales sont formées à partir de pistes ou de fil en une seule opération continue.

5. Procédé selon l'une des revendications 2 à 4, **caractérisé en ce que** lesdites spirales (2,5) sont séparées par une coupure (6A) réalisée dans une cavité (7,8)) de réception de la puce radiofréquence ou d'un module comportant la puce.

6. Support (1) à puce radiofréquence, comportant sur un support isolant, une première spirale 2 avec des zones d'interconnexion électriques (3, 4) reposant sur le support, **caractérisé en ce qu'**il comprend sur ledit support une seconde spirale (5) reliée à l'une des zones d'interconnexion (3, 4) par une liaison (6) destinée à ou configurée pour être sectionnée.

7. Support (1, 1A)) à puce radiofréquence, **caractérisé en ce qu'**il comprend la première spirale (2) séparée de la seconde (5) par une coupure de ladite liaison (6), ladite puce radiofréquence étant couplée électriquement à ladite première spirale (2) via les zones d'interconnexion électrique (3, 4).

8. Support (1, 1A) à puce radiofréquence, **caractérisé en ce qu'**il comprend lesdites spirales (2,5) reliées ensemble, et couplée électro magnétiquement avec la puce radiofréquence.

9. Support (1, 1A)) à puce radiofréquence, **caractérisé en ce que** la puce radiofréquence se trouve comprise dans un module de carte à puce à interface duale, ledit module étant insérée dans une cavité (7,8) du support à puce.
